Europäisches Patentamt

European Patent Office

Office européen des brevets

(11) Publication number: **0 164 175**
**A1**

# EUROPEAN PATENT APPLICATION

(21) Application number: **85200888.7**

(22) Date of filing: **06.06.85**

(51) Int. Cl.⁴: **G 11 B 33/10**

(30) Priority: **08.06.84 JP 84349/84**

(43) Date of publication of application: **11.12.85**
**Bulletin 85/50**

(84) Designated Contracting States: **BE DE FR GB**

(71) Applicant: **N.V. Philips' Gloeilampenfabrieken,**
**Groenewoudseweg 1, NL-5621 BA Eindhoven (NL)**

(72) Inventor: **Kawanaka, Yoshikazu, c/o INT.**
**OCTROOIBUREAU B.V. Prof. Holstlaan 6, NL-5656 AA**
**Eindhoven (NL)**
Inventor: **Nakayama, Mitsuhisa, c/o INT.**
**OCTROOIBUREAU B.V. Prof. Holstlaan 6, NL-5656 AA**
**Eindhoven (NL)**

(74) Representative: **Peters, Rudolf Johannes et al,**
**INTERNATIONAAL OCTROOIBUREAU B.V. Prof.**
**Holstlaan 6, NL-5656 AA Eindhoven (NL)**

(54) **Equipment which enables the words inscribed on a compact disc to be read while the disc is being played.**

(57) Equipment which enables the words inscribed on a compact disc to be read while the disc is being played by means of stroboscopic techniques and phase correction.

7 -- Player (Compact disc player)
1a -- Player body
0 -- Centre shaft
5 -- Disc
5a -- Surface
6 -- Words
9 -- Instantaneous light emitting equipment (strobe lamp)
10 -- Turntable
11 -- Cut-away parts
13 -- Detection device (Reflection type photosensor)
15 -- PLL circuit (Output circuit)
16 -- Conformation detecting circuit
17 -- Selection circuit

"Equipment which enables the words inscribed on a compact disc to be
 read while the disc is being played."

This invention concerns equipment which enables the words inscribed on a
compact disc to be read while the disc is being played on a compact disc
player.

In general a compact disc (referred to below as a disc) is
rotated at about 520 rpm at high speed or at about 200 rpm at low speed
when it is being played on a compact disc player, and since the speed is
much higher than of a record player ($33\frac{1}{3}$ rpm or 45 rpm ) there
is a problem in that it is not possible while the disc is being played
to verify by means of the words which have been inscribed on the disc
which disc is being played or what tunes are recorded on the disc.

This invention is intended to overcome the problem mentioned
above and, in order to achieve this aim, the design provides equipment
which enables the words etc. inscribed on a compact disc to read while
the disc is being played with which the position of the words etc. on
the surface of the compact disc can be corrected while the disc is being
played to an angle at which they can be read easily irrespective of the
angle at which the disc is mounted on the turntable, so that the
information such as the information relating to the music which has been
recorded on the disc etc. can be observed while the disc is being played.

In order to achieve the above mentioned aim, the invention is
characterized in that in a compact disc player there are established
rotational angle transmission devices which are arranged at a prescribed
angle on the circumferential edge of the turntable, taking the centre
shaft of the turntable of the said compact disc player as centre, for
the purpose of determining the rotation angle of the turntable, a
detecting device for detecting the rotational angle of each of the
prescribed angles on the aforementioned turntable which are put out from
the said rotation angle transmission device, an output circuit which
converts the rotation angles detected by the said detecting device to a
rotation angle signal which is then put out, a conformity detector to
which the rotation angle signal which is put out from the said output
circuit is input, which makes this conform with the precribed rotation angle signal for the aforementioned turntable which has been selected by a separately established selection circuit and which puts out a conforming signal, and instantaneous light emitting equipment which is linked to the said conformity detecting circuit and which illuminates the surface of the compact disc which is mounted on the aforementioned turntable on the basis of the conformity signal which is put out from the aforementioned conformity detecting circuit, and that the construction is such that the aforementioned instantaneous light emitting equipment directs light onto the disc in such a way that the information in the form of words and numbers etc. which is inscribed on the disc and which appears to be stationary can be corrected to a position where it can be easily read by simply operating the aforementioned selecting circuit, irrespective of the angle at which the aforementioned words and numbers of the information inscribed on the surface of the aforementioned compact disc are mounted on the aforementioned turntable.

With equipment of this invention it is possible to correct the stationary position of the words on a disc if they appear upside down or in a position where they are difficult to see while the disc is being played on the player body so that the words on the surface of the disc can be read precisely and so there is no need for the troublesome interruption the operation of the player in order to read out the words on the disc as was the case in the past.

The invention will now be described in more detail, by way of example, with reference to the drawings in which;

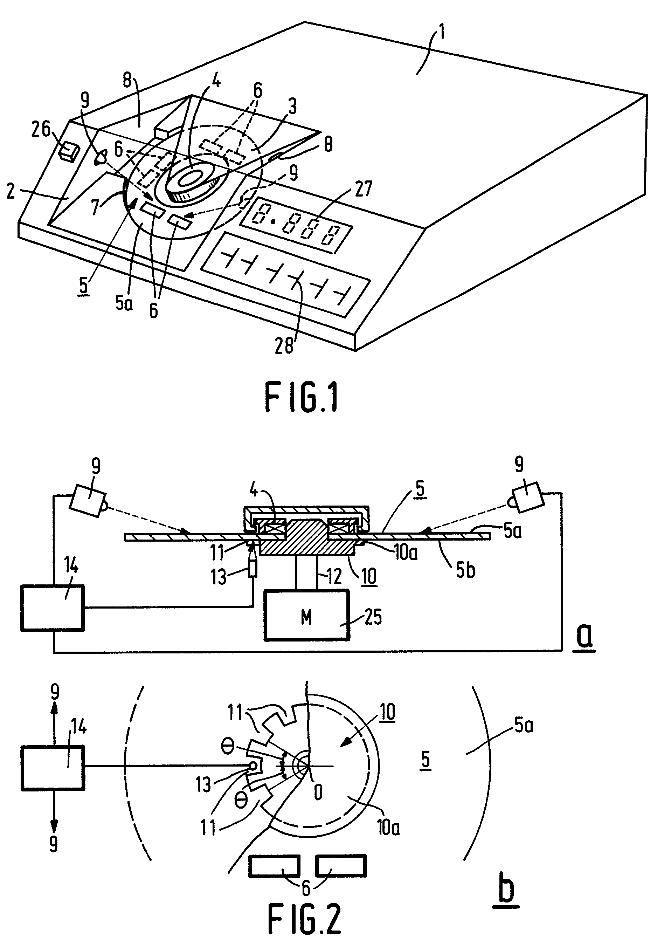

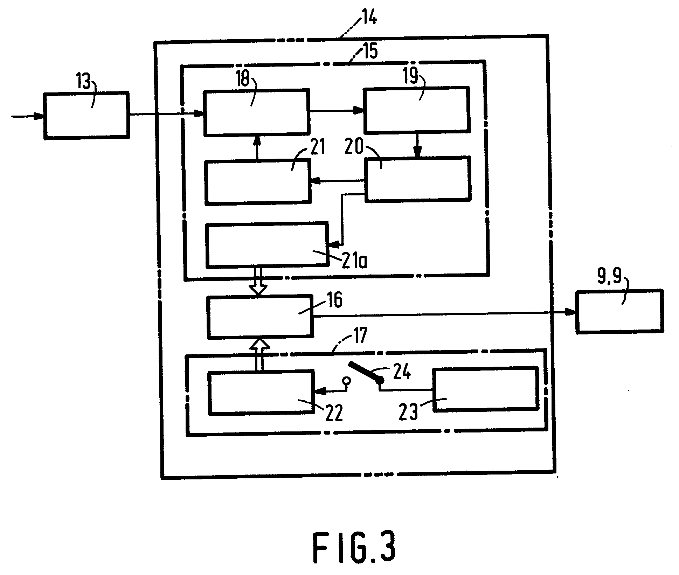

Figure 1 is an oblique view of an example of equipment of this invention, figure 2(a) is a cross sectional view of the essential parts of equipment of this invention, figure 2(b) is a plan view which shows the cut-away parts of the turntable in equipment of this invention and figure 3 is the circuit diagram of an example of equipment of this invention.

In figures 1 and 2, 1 is the compact disc player, 2 is a cover which is made of a transparent material such as a resin for example, 3 is the disc clamper and 4 is the arm which can be moved up and down. 5 is the disc and 6 are the words which carry the information relating to the music, such as the names of the tunes etc., which are inscribed on the surface 5a of the disc 5.

The two strobe lamps (instantaneous light emitting device) 9,9 which direct visible light onto the surface 5a of the disc 5 which has been mounted on the loading part 7 are established on the side parts 8,8 of the concavities which are formed on the loading part 7 of the player body 1a which mounts the disc 5 on the compact disc player 1 (referred to below as the player). As shown in figures 2(a) and 2(b), the strobe lamps 9,9 are connected to the reflection type photosensor 13 which is an optical detecting device which illuminates the reverse surface 5b and receives the reflected light on passing the cut-aways 11 which are the rotational angle transmission devices which are arranged radially at a fixed angle 8 with the centre shaft 0 of the turntable 10 as centre in the circumferential part 10a of the turntable 10 of the player 1 as the rotating shaft 12 of the turntable 10 is rotated, this reflecting type photosensor 13 being connected to the light emitting control circuit 14. The light emitting control circuit 14 is an output circuit which gives on output to the strobe lamps 9,9 at a certain angle of rotation deduced from the cut-away parts 11, ---, of the turntable 10 which are established at the prescribed angle. In outline the construction consists of the PLL circuit 15, the conformation detecting circuit 16 to which the rotating angle signals put out from the PLL circuit 15 are input and the selection circuit 17 with which the preferred rotation angle which is generated by the aforementioned cut-away parts for the conformation detecting circuit is selected and which and puts out the selected rotation angle signal to the conformation detecting circuit 16.

The PLL circuit 15 consists of the phase detector 18, the voltage control oscillator circuit 20 which generates pulses at a frequency of n times the rate of rotation of the disc 5 in synch with the rotation of the rotating shaft 12, the low pass filter 19, the frequency decoder 21 which decodes the pulses put out from the voltage control oscillator circuit 20 for n/(cut-aways) and the counter 21 which counts the n individual pulses, and this is set in such a way that the strobe lights 9,9 are made to emit light _via_ the conformity detecting circuit 16 when the value on the counter 21a shows the certain value (X) at which the anlge is such that reading is simple (for example at a certain fixed value within 256 if n = 256).

For example, if the certain value (X) is 10, the strobe lamps emit light when a fixed angle is exceeded after the reflection type photosensor 13 has detected a certain prescribed cut-away, at a position of 360 x (X/256) degrees, which is to say 360 x (10/256) degrees, and at this point the strobe lamps 9,9 illuminate the surface 5a of the disc 5. Hence by changing the certain value (X) it is possible to set the system in such a way that the strobe lamps 9,9 illuminate the surface 5a when it is in the condition in which the words 6 on the surface 5a of the disc 5 are corrected to an angle at which they are easily read.

The selection circuit 17 consists of the n stage counter memory 22 which stores and outputs the aforementioned certain value (X) and the switch 24 which selects one of the stored certain valeas (X), --- from the n stage counter memory, counts the pulses fed out from the self excited oscillator 23 for changing the rotation angle signal and which changes the rotation angle signal of the aforementioned n stage counter memory. Thus the preferred rotation angle signal which has been changed with the switch 24 which generates a pulse for each time it is pressed and which adjusts the angle for easy viewing is established as the output to the conformation detecting circuit 16. That is to say, the conformation detecting circuit 16 makes the rotation angle signal from the PLL circuit 15 and the rotation angle signal from the selection circuit 17 conform, inputs the conforming signal to the strobe lamps 9,9 and the strobe lamps 9,9 then illuminate the disc 5 which is mounted on the turntable 10 when it has been rotated into a position in which the words 6 which are inscribed on the surface 5a of the disc 5 can be easily read. In the drawings 25 is the motor, 26 is the power switch, 27 is the control display and 28 is the key arrangement for the control display.

The operation of equipment of this invention is described below.

The words 6 on the disc 5 are sometimes inclined, as shown by the chain lines in figure 1, and sometimes the disc is set on the player body 1a in such a way that the words are difficult to read, and the certain value (X) for the preferred rotation angle at which the words 6 on the disc 5 can be read easily is selected with the switch 24 when the play has started. If this is done it is possible to make the strobe lamps 9,9 emit light only when the disc 5 has rotated to such a position that the position of the words 6 on the disc 5 is that shown by the solid lines in figure 1 and the words 6 on the disc 5 can then be read precisely with the light which is being directed onto the disc 5 by the strobe lamps 9,9.

At this time the rotation of the disc is very rapid but the words on the disc are read in a stationary condition and so there is no need for the troublesome interruption of the player 1 in order to read the words 6 on the surface 5a of the disc 5 which is being played on the player 1. Moreover cut-aways 11, --- are formed in the circumferential part 10a of the turntable 10 for the rotation angle transmission device in this example of the design but in place of this a bar code consisting of parts which have powerful light reflecting properties could be established with a prescribed angular spacing on the circumferential part 10a and a photosensor could then be used as a means of detecting the bright-dark contrast of the reflecting light.

Equipment which enables the words inscribed on a compact disc to be read while the disc is being played on a compact disc player, characterized in that in a compact disc player there are established rotational angle transmission device which are arranged at a prescribed angle on the circumferential edge of the turntable, taking the centre shaft of the turntable of the said compact disc player as centre, for the purpose of determining the rotation angle of the turntable, a detecting device for detecting the rotational angle of each of the prescribed angles on the aforementioned turntable which are put out from the said rotation angle transmission device, an output circuit which converts the rotation angles detected by the said detecting device to a rotation angle signal which is then put out, a conformity detector to which the rotation angle signal which is put out from the said output circuit is input, which makes this conform with the prescribed rotation angle signal for the aforementioned turntable which has been selected by a separately established selection circuit and which puts out a conforming signal, and instantaneous light emitting equipment which is linked to the said conformity detecting circuit and which illuminates the surface of the compact disc which is mounted on the aforementioned turntable on the basis of the conformity signal which is out out from the aforementioned conformity detecting circuit, and that the construction is such that the aforementioned instantaneous light emitting equipment directs light onto the disc in such a way that the information in the form of words and numbers etc. which is inscribed on the disc and which appears to be stationary can be corrected to a position where it can be easily read by simply operating the aforementioned selecting circuit, irrespective of the angle at which the aforementioned words and numbers of the information inscribed on the surface of the aforementioned compact disc are mounted on the aforementioned turntable

FIG.1

FIG.2

FIG.3

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 330 229  (ALPS ELECTRIC CO.) <br> * Page 8, lines 8-26; page 9, lines 9-36; figure 6 * | 1 | G 11 B   33/10 |
| P,Y | PATENT ABSTRACTS OF JAPAN, vol. 8, no. 141, 30th June 1984, page (P-283) (1578); & JP-A-59-40349 (HITACHI) 06-03-1984 | 1 | |

TECHNICAL FIELDS
SEARCHED (Int. Cl.4)

G 11 B   23/00
G 11 B   33/10

The present search report has been drawn up for all claims

| Place of search | Date of completion of the search | Examiner |
|---|---|---|
| BERLIN | 28-08-1985 | WIBERGH S.R. |